# EUROPÄISCHE PATENTSCHRIFT

(11) **EP 2 951 016 B1**
(45) Veröffentlichungstag und Bekanntmachung des Hinweises auf die Patenterteilung: **04.10.2017**
(21) Anmeldenummer: 14708491.7
(22) Anmeldetag: 03.02.2014
(51) Int. Cl.: B32B 37/04

(54) **VERFAHREN ZUM HERSTELLEN EINES LAMINATS OHNE KLEBSTOFF**
METHOD FOR PRODUCING A LAMINATE WITHOUT ADHESIVE
PROCÉDÉ PERMETTANT DE PRODUIRE UN STRATIFIÉ SANS ADHÉSIF

(30) Priorität: 04.02.2013 DE 102013001826
(43) Veröffentlichungstag der Anmeldung: 09.12.2015
(73) Patentinhaber: Klomfass Gierlings & Partner Gbr, 40213 Düsseldorf (DE)
(72) Erfinder: GIERLINGS, Michael, 40723 Hilden (DE); KLOMFASS, Thorsten, 40213 Düsseldorf (DE)
(74) Vertreter: Schneiders, Josef
(86) Internationale Anmeldenummer: PCT/EP2014/051977
(87) Internationale Veröffentlichungsnummer: WO 2014/118356

(56) Entgegenhaltungen:
- EP-A2- 0 231 013
- DE-U1- 20 020 148
- US-A- 4 933 231

## Beschreibung

Die Erfindung betrifft ein Verfahren zum Herstellen eines Laminats ohne Klebstoff mit einem Substrat aus einer thermoplastischen Schicht und mindestens einer darauf aufgebrachten Schicht aus Vliesstoff/ Gewebe, wobei
- eine Wärmezuführung nur in die thermoplastische Schicht über Infrarotstrahlung erfolgt,
- durch die Infrarotstrahlung nur eine Oberfläche der thermoplastischen Schicht angeschmolzen wird,
- die Schichten zu einem Laminat aufeinander gepresst werden und
- das Laminat gekühlt wird.

Ein Verfahren der genannten Art ist beispielsweise aus der amerikanischen Offenlegungsschrift US 2008/0274307 A1 bekannt. Die dort beschriebene Kaschiervorrichtung verbindet ein textiles Flächengebilde mit einer schmelzbaren oberen Schicht zu einem Laminat, genauer gesagt einem laminierten Teppich. Die schmelzbare obere Schicht besteht aus einem Thermoplast und wird vor dem Verbinden mit dem textiles Flächengebilde mittels Infrarotstrahlung erwärmt. Nach der Verbindung der schmelzbaren oberen Schicht mit dem textilen Flächengebilde wird das Laminat gekühlt.

Dieses Verfahren hat den Vorteil, dass eine klebstofffreie Verbindung zweier Schichten mittels Erwärmung der thermoplastischen Schicht durch Infrarotstrahlung erfolgt.

Des Weiteren ist in der US-A-4 933 231 ein ähnliches Verfahren zur Herstellung eines Laminats offenbart, das besonders abrieb- und reißfest ist und sich somit für den Einsatz unter strapaziösen Bedingungen eignet. Bei diesem Verfahren wird ebenfalls kein Klebstoff verwendet und die Erwärmung kann durch Infrarot erfolgen. Die thermoplastische Schicht wird zuerst im Bereich ihrer zu verbindenden Oberfläche erhitzt und dann mittels Presswalzen mit einem Gewebe zusammengepresst. Nach diesem Pressvorgang wird das Laminat bei Umgebungstemperatur durch mindestens eine weitere Presswalze geführt.

Diese Verfahren eigenen sich jedoch nicht zum Verbinden von Schichten für Hygieneartikel. Hygieneartikel bestehen aus dünnen Schichten. Je dünner die Schichten sind, desto schneller verlieren sie beim Erwärmen ihre Form und Struktur und verändern somit unkontrollierbar ihre für den Kaschiervorgang erforderlichen mechanischen Eigenschaften. Bei Teppichen und ähnlich abrieb- und reißfesten Laminaten verwendet man demgegenüber für die Beschichtung erheblich dickere thermoplastische Schichten, die sich bei der einseitigen Erwärmung kaum verformen.

Ein Verfahren zum Herstellen eines Laminats für Hygieneartikel wird in der deutschen Offenlegungsschrift DE 10 2004 042 405 A1 genannt. Diese Offenlegungsschrift beschreibt ein Verfahren zur Herstellung von Vlies-Folien-Laminaten für Hygieneartikel aus einer thermoplastischen Schicht und einem Vliesstoff. Hier wird jedoch die thermoplastische Schicht zusammen mit dem Vliesstoff erwärmt, zu einem Laminat gepresst und durch einen gekühlten Walzenspalt geführt. Hierbei wird allerdings die gesamte thermoplastische Schicht bis zum schmelzflüssigen Zustand erwärmt.

Das zuletzt genannte Verfahren hat den Vorteil, dass eine Verbindung zwischen der thermoplastischen Schicht und einem Vliesstoff frei von Klebstoff ist. Insbesondere für Hygieneartikel ist dies ein bedeutender Vorteil, da sensible Hauttypen negativ auf mögliche migrationsfähige Bestandteile aus Klebstoffen ansprechen. Neben der besseren Gesundheitsverträglichkeit wird die Umwelt im Hinblick auf die Massenproduktion aufgrund des Verzichts auf Klebstoffe erheblich geschont. Ein weiterer wesentlicher Aspekt ist die insgesamt günstigere Herstellung der Hygieneartikel aufgrund der Klebstoffeinsparung.

Das zuletzt genannte Verfahren hat jedoch den Nachteil, dass bei der Erwärmung der Schichten auf den Schmelzpunkt des Vliesstoffes Rücksicht genommen werden muss. Aufgrund dieser Abhängigkeit lässt sich die thermoplastische Schicht nicht in jedem Fall auf die für das Fügen optimale Temperatur erwärmen. Zudem besteht das Problem, dass die thermoplastische Schicht insgesamt erwärmt werden muss und aufgrund dieser Erwärmung insgesamt schmelzflüssig wird und somit ihre Struktur vollkommen verliert.

Es ist daher Aufgabe der Erfindung, ein Verfahren zur Herstellung eines Laminats für Hygieneartikel zu schaffen, das ohne Einsatz von Klebstoffen funktioniert und eine optimierte Wärmezuführung für die Laminatherstellung ermöglicht. Dabei sollen die Strukturen der einzelnen Schichten nicht beschädigt werden, um ihre mechanischen Eigenschaften in dem herzustellenden Laminat beizubehalten.

Zur Lösung dieser Aufgabe schlägt die Erfindung ausgehend von einem Verfahren der eingangs genannten Art vor, dass die thermoplastische Schicht während der oberseitigen Wärmezuführung an der Unterseite gekühlt wird und dass als Infrarotstrahlung nahes Infrarot verwendet wird, mit einem Wellenlängenbereich von 1,2 bis 2,5 Mikrometern, insbesondere von 1,6 bis 1,8 Mikrometern. Da beim Verfahren gemäß der Erfindung nur die thermoplastische Schicht erwärmt wird, lässt sie sich unabhängig vom Schmelzpunkt des Vliesstoffes ausschließlich im Fügebereich auf ihre ideale Fügetemperatur erwärmen. Dies gewährleistet eine starke Bindung innerhalb des Laminats. Durch die selektive Erwärmung der Oberfläche der thermoplastischen Schicht mittels der Infrarotstrahlung bei gleichzeitiger aktiver Kühlung der Unterseite, bleibt die tragende Struktur der thermoplastischen Schicht im Wesentlichen erhalten. Da das Vlies nicht erwärmt wird, bleiben dessen Eigenschaften im Laminat erhalten. Die Kühlung kann über ein gekühltes Leitblech, Schwebekühlung, Kühlwalzen oder ähnliche Vorrichtung erfolgen.

Zusätzlich zu der Kühlung der thermoplastischen Schicht an der Unterseite ist für die Lehre der Erfindung der angegebene Wellenlängenbereich für die Erwärmung durch die verwendeten Infrarotstrahler wichtig. Überraschenderweise hat sich nämlich herausgestellt, dass sich die thermoplastische Schicht in dem angegebenen Wellenlängenbereich besonders schnell erwärmt und somit den Effekt der selektiven Oberflächenschmelzung der thermoplastischen Schicht ermöglicht.

Die besten Ergebnisse lassen sich nach Lehre der Erfindung erzielen, wenn als Infrarotquelle stabförmige Infrarotstrahler und/ oder Infrarot-Stiftsockellampen verwendet werden. Diese Infrarotquellen ermöglichen eine gezielte und definierte Wärmezuführung auf die Oberfläche der thermoplastischen Schicht.

Es hat sich herausgestellt, dass das Laminat eine besonders gute Verbindung aufweist, wenn die Temperatur der Infrarotquelle auf 1800 K bis 2300 K eingestellt wird. Temperaturen unter 1800 K liefern eine schlechte Verbindung, da die Oberfläche der thermoplastischen Schicht nicht hinreichend angeschmolzen wird. Über 2300 K schmilzt die gesamte thermoplastische Schicht an. Um eine Verbindung nach Lehre der Erfindung zu erhalten, ist ein Temperaturintervall der Infrarotquelle gemäß den vorgenannten Werten notwendig.

Ähnliches trifft auf den Abstand zwischen der Infrarotquelle und der thermoplastischen Schicht zu. Dieser sollte auf 3 cm bis 30 cm, insbesondere auf 4 cm bis 7 cm, eingestellt werden. Bei zu kurzem Abstand der Infrarotquelle zu der thermoplastischen Schicht kann sich die Infrarotstrahlung nicht flächig auf der thermoplastischen Schicht verteilen und sorgt für eine zu starke punktuelle Wärmezuführung, die die thermoplastische Schicht an diesen Stellen unkontrolliert aufschmelzen lässt. Bei einem kritischen Abstand von über 30 cm reicht die Strahlungsintensität nicht mehr aus, um die Oberfläche der thermoplastischen Schicht anzuschmelzen. Hier greift das Abstandsgesetz, nach dem die Strahlungsintensität, d.h. die Leistung pro Fläche, mit 1/r² abnimmt.

Eine vorteilhafte Methode sieht vor, dass die Schichten über ein Kaschierwerk zu einem Laminat verbunden werden. Prinzipiell werden beim Kaschieren zwei Bahnen miteinander verbunden. Das Kaschierwerk hat den Vorteil, dass die einzelnen Schichten in einem Arbeitsschritt und damit schnell miteinander verbunden werden.

Ein nach dem erfindungsgemäßen Verfahren hergestelltes Laminat zeichnet sich durch seine weitgehend intakte bleibende Struktur aus, weil durch die Infrarotstrahlung nur die Oberfläche der thermoplastischen Schicht angeschmolzen wurde. Insbesondere die Struktur des Vliesstoffes/Gewebes bleibt vollständig erhalten, da diese nicht erwärmt werden.

Ein weiterer Vorteil besteht darin, dass die Schichten nach dem Fügeverfahren dehnbar, insbesondere elastisch, bleiben können, weil die wesentlichen Strukturen der Schichten keinem bzw. nur geringem Wärmeeinfluss unterliegen.

Besonders geeignete Materialen zur Herstellung eines Laminats nach dem erfindungsgemäßen Verfahren sind: Für die thermoplastische Schicht Polyethylen, Polypropylen, Polystyrol, Polyamide, Latex oder Gummi; für den Vliesstoff Polypropylen-Vlies oder Polyamid-Vlies; für das Gewebe Polypropylen-Gewebe, Polyamid-Gewebe oder Polyethylenterephtalat-Gewebe. Diese Materialien eignen sich insbesondere zum Laminieren nach der Lehre der Erfindung. Sie sprechen insbesondere auf die halbe Wellenlänge der eigentlich optimalen Absorptionswellenlänge für polyolefinische Folien an.

Ein Ausführungsbeispiel der Erfindung wird im Folgenden anhand der Zeichnung näher erläutert. Es zeigt:

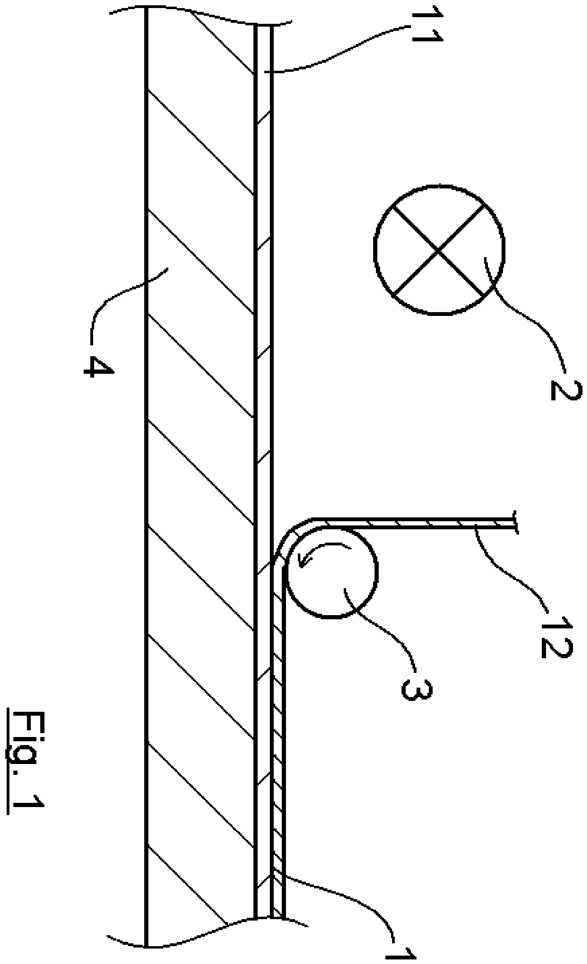

- Figur 1:: Prinzipskizze der Vorrichtung eines Verfahrens zum Herstellen eines Laminats ohne Klebstoff nach Lehre der Erfindung.

Figur 1 zeigt eine Prinzipskizze einer Vorrichtung für ein Verfahren zum Herstellen eines Laminats 1 ohne Klebstoff aus einer thermoplastischen Schicht 11 und einem darauf aufgebrachten Vliesstoff 12. Die thermoplastische Schicht 11 läuft über ein gekühltes Leitblech 4. Die Wärmezuführung erfolgt über eine Infrarotquelle 2. Die thermoplastische Schicht 11 und der Vliesstoff 12 werden an einem Kaschierwerk 3 miteinander zu einem Laminat 1 verbunden. Die thermoplastische Schicht 11 wird über den gesamten Prozess über das gekühlte Leitblech 4 gekühlt.

## Patentansprüche

1. Verfahren zum Herstellen eines Laminats (1) ohne Klebstoff mit einem Substrat aus einer thermoplastischen Schicht (11) und mindestens einer darauf aufgebrachten Schicht aus Vliesstoff/ Gewebe (12), wobei
- eine Wärmezuführung nur in die thermoplastische Schicht (11) über Infrarotstrahlung erfolgt,
- durch die Infrarotstrahlung nur eine Oberfläche der thermoplastischen Schicht (11) angeschmolzen wird,
- die Schichten (11, 12) zu einem Laminat (1) aufeinander gepresst werden
- das Laminat (1) gekühlt wird,
**dadurch gekennzeichnet, dass** die thermoplastische Schicht (11) während der oberseitigen Wärmezuführung an der Unterseite gekühlt wird und dass als Infrarotstrahlung nahes Infrarot verwendet wird, mit einem Wellenlängenbereich von 1,2 bis 2,5 Mikrometern, insbesondere von 1,6 bis 1,8 Mikrometern.

2. Verfahren nach der Anspruch 1, **dadurch gekennzeichnet, dass** als Infrarotquelle (2) stabförmige Infrarotstrahler und/oder Infrarotstiftsockellampen verwendet werden.

3. Verfahren nach einem der vorgenannten Ansprüche, **dadurch gekennzeichnet, dass** die Temperatur der Infrarotquelle (2) auf 1800 K bis 2300 K eingestellt wird.

4. Verfahren nach einem der vorgenannten Ansprüche, **dadurch gekennzeichnet, dass** der Abstand zwischen der Infrarotquelle (2) und der thermoplastischen Schicht (11) auf 3 bis 30 Zentimeter, insbesondere auf 4 bis 7 Zentimeter, eingestellt wird.

5. Verfahren nach einem der vorgenannten Ansprüche, **dadurch gekennzeichnet, dass** die Schichten über ein Kaschierwerk (3) oder über mehrere, milde Kaschiervorgänge zu einem Laminat verbunden werden.

## Claims

1. Method for producing a laminate (1) without adhesive, comprising a substrate of a thermoplastic layer (11) and at least one layer of nonwoven/woven fabric (12) applied thereto, wherein
- heat is supplied only to the thermoplastic layer (11) by means of infrared radiation,
- only a surface of the thermoplastic layer (11) is incipiently melted by the infrared radiation,
- the layers (11, 12) are pressed one onto the other to form a laminate (1),
- the laminate (1) is cooled,
**characterized in that** the thermoplastic layer (11) is cooled on the underside while heat is supplied to the upper side and **in that** near infrared, with a wavelength range of 1.2 to 2.5 micrometres, in particular of 1.6 to 1.8 micrometres, is used as the infrared radiation.

2. Method according to Claim 1, **characterized in that** bar-shaped infrared emitters and/or infrared pinbase lamps are used as the infrared source (2).

3. Method according to one of the preceding claims, **characterized in that** the temperature of the infrared source (2) is set to 1800 K to 2300 K.

4. Method according to one of the preceding claims, **characterized in that** the distance between the infrared source (2) and the thermoplastic layer (11) is set to 3 to 30 centimetres, in particular to 4 to 7 centimetres.

5. Method according to one of the preceding claims, **characterized in that** the layers are joined to form a laminate by means of a laminating unit (3) or by means of a number of mild laminating processes.

## Revendications

1. Procédé permettant de produire un stratifié (1) sans adhésif avec un substrat composé d'une couche (11) thermoplastique sur laquelle est appliquée au moins une couche en non-tissé/tissu (12),
- un apport de chaleur s'effectuant uniquement dans la couche (11) thermoplastique par le biais d'un rayonnement infrarouge,
- seule une surface de la couche (11) thermoplastique étant fondue par le rayonnement infrarouge,
- les couches (11, 12) étant pressées l'une contre l'autre pour former un stratifié (1),
- le stratifié (1) étant refroidi,
**caractérisé en ce que** la couche (11) thermoplastique est refroidie sur le côté inférieur pendant l'apport de chaleur côté supérieur, et **en ce que**, en tant que rayonnement infrarouge, il est utilisé le proche infrarouge avec une plage de longueur d'onde de 1,2 à 2,5 micromètres, en particulier de 1,6 à 1,8 micromètre.

2. Procédé selon la revendication 1, **caractérisé en ce que**, en tant que source infrarouge (2), il est utilisé un émetteur infrarouge en forme de barre et/ou des lampes à culot à broches infrarouges.

3. Procédé selon l'une des revendications précédentes, **caractérisé en ce que** la température de la source infrarouge (2) est réglée de 1 800 K à 2 300 K.

4. Procédé selon l'une des revendications précédentes, **caractérisé en ce que** la distance entre la source infrarouge (2) et la couche (11) thermoplastique est réglée de 3 à 30 centimètres, en particulier de 4 à 7 centimètres.

5. Procédé selon l'une des revendications précédentes, **caractérisé en ce que** les couches sont raccordées par le biais d'un système de plaquage (3) ou par le biais de plusieurs processus doux de plaquage pour former un stratifié.
